# EUROPÄISCHE PATENTSCHRIFT

(11) **EP 0 659 622 B1**
(45) Veröffentlichungstag und Bekanntmachung des Hinweises auf die Patenterteilung: **07.05.1997**
(21) Anmeldenummer: 94117193.6
(22) Anmeldetag: 31.10.1994
(51) Int. Cl.: B60T 15/18, B60T 13/66

(54) **Druckluftbetätigte Zweileitungs-Bremsanlage**
Air pressure operated two-pipes brake system
Installation de frein à deux conduites à air comprimé

(30) Priorität: 24.12.1993 DE 4344371
(43) Veröffentlichungstag der Anmeldung: 28.06.1995
(73) Patentinhaber: WABCO GmbH, D-30453 Hannover (DE)
(72) Erfinder: Walter, Karsten, D-30890 Barsinghausen (DE); Lichtenberg, Wolfgang, D-30457 Hannover (DE); Amtsfeld, Joachim, D-30173 Hannover (DE)
(74) Vertreter: Schrödter, Manfred, Dipl.-Ing.

(56) Entgegenhaltungen:
- DE-B- 2 633 161
- DE-C- 2 437 027

## Beschreibung

Die Erfindung betrifft eine druckluftbetätigte Zweileitungs-Bremsanlage gemäß dem Oberbegriff des Patentanspruchs 1.

Eine derartige Zweileitungs-Bremsanlage ist aus der DE 24 37 027 C2 bekannt.

Die in dieser Schrift gezeigte und beschriebene Zweileitungs-Bremsanlage besitzt eine als Anhänger-Steuerventil dienende Steuerventileinrichtung zur Speisung einer zwischen einem Zugfahrzeug und einem Anhängerfahrzeug angeordneten Anhänger-Bremsleitung mit Druckluft aus einer ebenfalls zwischen dem Zugfahrzeug und dem Anhängerfahrzeug angeordneten Anhänger-Vorratsleitung.

Die Steuerventileinrichtung weist eine mittels eines Steuerkolbens betätigbare, aus einer ungedrosselten Betriebsstellung heraus zu kleineren Durchlaßquerschnitten hin veränderbare Drossel auf. Der Steuerkolben der Drossel wird einerseits vom Steuerdruck der Steuerventileinrichtung und andererseits im wesentlichen von dem hinter der Drossel anstehenden Vorratsdruck so beaufschlagt, daß die auch die Steuerventileinrichtung speisende Anhänger-Vorratsleitung bei einem Bruch der Anhänger-Bremsleitung gedrosselt wird. Die so erreichte Drosselung des Druckluftdurchsatzes durch die erwähnte Anhänger-Vorratsleitung verhindert, daß die über die defekte Anhänger-Bremsleitung ablaufende Entlüftung des der Drossel nachgeschalteten Teiles der Anhänger-Vorratsleitung aufgehoben wird. Mittels eines auf die Entlüftung der Anhänger-Vorratsleitung reagierenden Anhänger-Bremsventils an dem Anhängerfahrzeug wird somit eine schnelle automatische Bremsung des Anhängerfahrzeugs beim Bruch der Anhänger-Bremsleitung eingeleitet.

Bei einer elektro-pneumatisch betätigbaren Zweileitungs-Zweikreis-Bremsanlage, bei welcher die Steuerkammer eines in der Bremsanlage angeordneten Anhänger-Steuerventils über ein elektrisch steuerbares Ventil mit der Druckluft aus der Anhänger-Vorratsleitung beaufschlagt wird und bei welcher der Steuerkolben einer in die Anhänger-Vorratsleitung geschalteten Drosseleinrichtung vom Steuerdruckmittel der Steuerkammer des Anhänger-Steuerventils im Sinne einer Verringerung des Durchlaßquerschnittes der Drosseleinrichtung beaufschlagt wird, kann es passieren, daß bei einer Beschädigung der Anhänger-Bremsleitung der Steuerdruck aus der Steuerkammer des Anhänger-Steuerventils nicht ausreicht, um die Drosseleinrichtung zu schalten. Dies ist bedingt durch den Umstand, daß bei einem Schaden an der Anhänger-Bremsleitung bei einem Bremsvorgang der Druck in der Anhänger-Vorratsleitung erheblich absinkt, da eine mehr oder weniger große Menge der von der Anhänger-Vorratsleitung über das Anhänger-Steuerventil in die Anhänger-Bremsleitung eingespeisten Druckluft über die schadhafte Stelle in der Anhänger-Bremsleitung zur Atmosphäre hin abströmt und dadurch bedingt auch der Druck in der aus der Anhänger-Vorratsleitung über das elektrische Steuerventil mit der Steuerluft versorgten Steuerkammer des Anhänger-Steuerventils sinkt. Zwangsläufig sinkt dann auch der den Steuerkolben der Drosseleinrichtung beaufschlagende Druck, der identisch ist mit dem Druck in der Steuerkammer des Anhänger-Steuerventils, ab. Es ist dann nicht mehr sichergestellt, daß der Steuerkolben der Drosseleinrichtung vom Druck der Steuerkammer des Anhänger-Steuerventils in eine den Durchlaßquerschnitt der Drosseleinrichtung verringernde Stellung gebracht wird.

Der Erfindung liegt die Aufgabe zugrunde, eine druckluftbetätigte Zweileitungs-Bremsanlage mit Drosseleinrichtung der eingangs erwähnten Art zu schaffen, bei welcher die vorstehend genannten Nachteile vermieden werden.

Diese Aufgabe wird mit der im Patentanspruch 1 angegebenen Erfindung gelöst. Weiterbildungen und vorteilhafte Ausgestaltungen der Erfindung sind in den Unteransprüchen aufgezeigt.

Die Erfindung bietet insbesondere den Vorteil, neben der universellen Einsetzbarkeit der Drosseleinrichtung zum Betätigen der Drosseleinrichtung nur die Druckluft der im Störfall zu drosselnden Anhänger-Vorratsleitung zwischen dem Zugfahrzeug und dem Anhängerfahrzeug zu benötigen. Funktionsstörungen an der Drosseleinrichtung, wie sie bei anderen, mit einer externen Steuerdruckmittelquelle arbeitenden Drosseleinrichtungen auftreten können, sind daher ausgeschlossen. Die Drosseleinrichtung kann sowohl in rein pneumatisch als auch in elektro-pneumatisch betätigten Bremsanlagen eingesetzt werden.

Anhand der Zeichnung wird nachfolgend ein Ausführungsbeispiel der Erfindung näher erläutert. Es zeigen:
- Fig.1: ein in einer elektro-pneumatisch betätigbaren Zweileitungs-Bremsanlage angeordnetes Anhänger-Steuerventil mit einer Drosseleinrichtung,
- Fig. 2 und Fig. 3: zwei Schaltstellungen der Drosseleinrichtung gemäß Figur 1 bei einem Bremsvorgang bei intakter Anhänger-Bremsleitung und
- Fig. 4: die Drosseleinrichtung gemäß Fig. 1 bei einem Bremsvorgang bei defekter Anhänger-Bremsleitung.

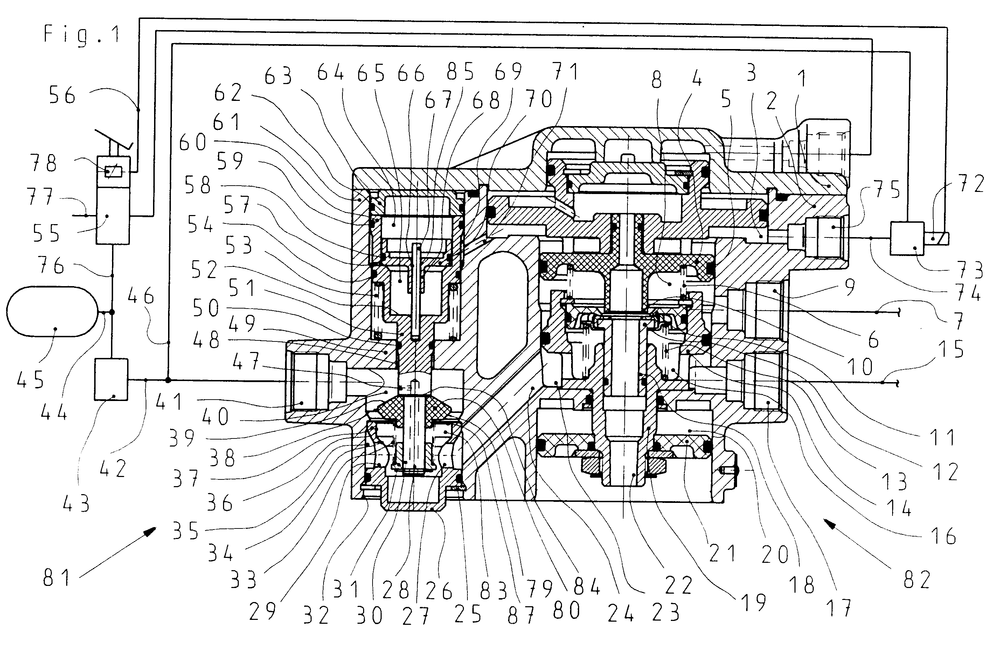

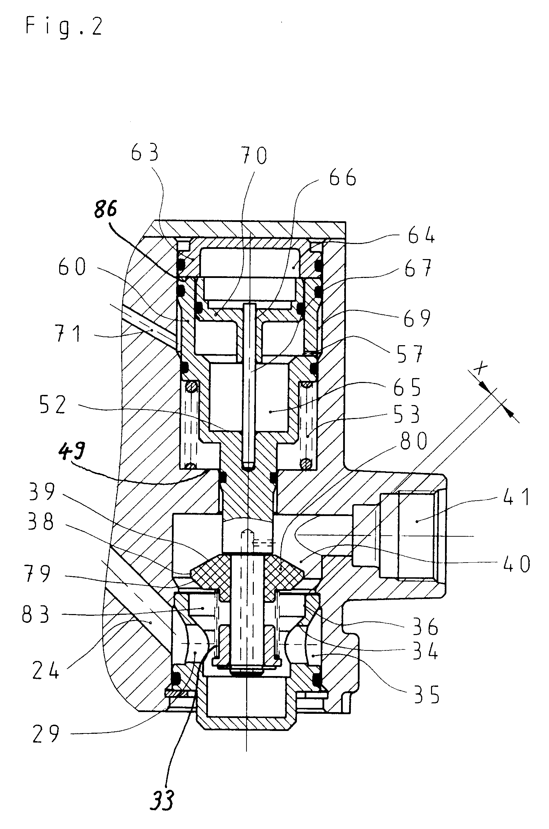

In den Figuren 2 bis 4 ist die Drosseleinrichtung, bezogen auf die in Fig. 1 dargestellte Steuerventileinrichtung, seitenverkehrt dargestellt.

Die als Anhänger-Steuerventil ausgebildete, in Fig. 1 dargestellte Steuerventileinrichtung (82) weist ein von einem Deckel 1 verschlossenes Ventilgehäuse (2) auf, in welchem ein Relaiskolben (4) in Richtung der Längsachse des Ventilgehäuses (2), mittels eines Dichtringes (5) abgedichtet verschiebbar angeordnet ist. Der Relaiskolben (4) trennt eine Steuerkammer (3) von einer Druckmittelausgangskammer (8). Die Steuerkammer (3) ist über einen Steueranschluß (75), eine Druckmittelleitung (74), ein als Proportionalventil (73) ausgebildetes Elektromagnetventil und eine Druckmittelleitung (46) mit einer Druckmittelleitung (42) eines dritten Bremskreises eines als Zugfahrzeug dienenden Motorfahrzeugs verbunden. Über einen als Druckmittelausgang (9) dienenden Druckmittelanschluß steht die Druckmittelausgangskammer (8) mit einer zu einem Anhänger-Bremsventil eines Anhängerfahrzeugs führenden Anhänger-Bremsleitung (7) in Verbindung. Der Relaiskolben (4) wird von einer Feder (6) in Richtung auf die Steuerkammer (3) zu belastet.

Unterhalb des Relaiskolbens (4) ist eine aus einem ersten Steuerkolbenteil (14, 19) und einem zweiten Steuerkolbenteil (21) bestehende Steuerkolbeneinheit (14, 19, 21) angeordnet, wobei die beiden Steuerkolbenteile (14, 19 und 21) fest miteinander verbunden sind. Zur Verbindung der beiden Steuerkolbenteile (14, 19) und (21) dient ein rohrförmiger Fortsatz (19) des ersten Steuerkolbenteils (14, 19), welcher sich durch eine Öffnung in einer Gehäusewand hindurch in Richtung auf einen zur Atmosphäre hin führenden Druckmittelauslaß (22) des Ventilgehäuses (2) zu erstreckt. Das erste Steuerkolbenteil (14, 19) begrenzt mit seiner dem Relaiskolben (4) zugewandten Seite die Druckmittelausgangskammer (8) und mit seiner dem Relaiskolben (4) abgewandten Seite eine Druckmitteleingangskammer (16, 23). Die dem ersten Steuerkolbenteil (14, 19) abgewandte Seite der Gehäusewand begrenzt zusammen mit der der Gehäusewand zugewandten Seite des zweiten Steuerkolbenteiles (21) eine Druckmittelkammer (20), die über einen nicht dargestellten Druckmittelanschluß mit einem Handbremsventil des Zugfahrzeugs verbunden ist.

Die beiden Steuerkolbenteile (14, 19) und (21) tragen auf ihrem Umfang je einen Dichtring, wobei die Dichtringe dichtend an der Innenwand des Gehäuses (2) anliegen, so daß zwischen der Druckmitteleingangskammer (16, 23) und der Druckmittelausgangskammer (8) kein unbeabsichtigter Austausch von Druckmittel stattfinden und von der Druckmittelkammer (20) Druckmittel nicht zum Druckmit-telauslaß (22) gelangen kann.

Selbstverständlich ist auch zwischen der die Durchgangsöffnung in der Gehäusewand begrenzenden Wandung und der Umfangsfläche des rohrförmigen Fortsatzes (19) des ersten Steuerkolbenteiles (14, 19) ein Dichtring vorgesehen, welcher einen Druckmittelaustausch zwischen dem Druck der Druckmittelkammer (20) und dem Druck der Druckmitteleingangskammer (16, 23) verhindert.

Im ersten Steuerkolbenteil (14, 19) ist zentrisch eine Ausnehmung vorgesehen, in welcher ein als Ventilsitz (11) ausgebildeter ringförmiger Körper angeordnet ist. Ein als Ventilglied (12, 18) ausgebildetes rohrförmiges Teil wird im rohrförmigen Fortsatz (19) des ersten Steuerkolbenteils (14, 19) abgedichtet verschiebbar geführt und mittels einer Feder (13) unter Zwischenschaltung eines Federtellers in Richtung auf den Ventilsitz (11) zu belastet. Der Relaiskolben (4) besitzt auf seiner dem ersten Steuerkolbenteil (14) zugewandten Seite einen rohrförmigen Fortsatz, der an seinem freien Ende als Ventilsitz (10) ausgebildet ist. Der Ventilsitz (11) und das Ventilglied (12, 18) bilden einen Einlaßventil (11, 12, 18) und der Ventilsitz (10) bildet mit dem Ventilglied (12, 18) ein Auslaßventil (10, 12, 18) eines kombinierten Einlaß- und Auslaßventils (11, 12, 18, 10). Über das Einlaßventil (11, 12, 18) ist die Druckmittelausgangs-kammer (8) mit der Druckmitteleingangskammer (16, 23) und über das Auslaßventil (10, 12, 18) ist die Druckmittelaus-gangskammer (8) über den als Druckmittelauslaß (20) dienenden Durchlaß im rohrförmigen Fortsatz (19) des ersten Steuerkolbenteiles (14, 9) mit der Atmosphäre verbindbar.

Die Druckmitteleingangskammer (16, 23) ist über einen Druckmittelanschluß (17) mit einem Leitungsteil (15) einer Anhänger-Vorratsleitung (15, 42) verbunden. Über einen nicht dargestellten Druckmittelanschluß steht die Druckmittelkammer (20) mit dem Handbremsventil in Verbindung.

Das Proportionalventil (73) ist mittels eines Elektromagneten (72) betätigbar. Der Elektromagnet (72) ist über eine elektrische Steuerleitung (56) mit einem elektrischen Signalgeber (78) eines Motorwagen-Bremsventils (55) verbunden. Bei Betätigen der Trittplatte des Motorwagen-Bremsventils (55) wird vom Signalgeber (78) über die elektrische Steuerleitung (56) ein z. B. der Stellung der Trittplatte entsprechendes elektrisches Signal auf den Elektromagneten (72) des Proportionalventils (73) gegeben. Dieses elektrische Signal stellt den vom Motorwagen-Bremsventil (55) ausgesteuerten Druck für die Bremsanlage des Zugfahrzeugs (Motorwagen) dar. Das Proportionalventil (73) steuert einen diesem elektrischen Signal proportionalen Druck aus, der dann als Steuerdruck für das Anhänger-Steuerventil dient.

Das Motorwagen-Bremsventil (55) ist über eine Druckmittelleitung (76) mit dem Vorrat des Zugfahrzeugs und über eine weitere Druckmittelleitung (77) mit den Bremszylindern oder mit den Bremszylindern vorgeschalteten Ventilen der Bremsanlage des Zugfahrzeugs verbunden.

In einem weiteren Gehäuse (61), welches einstückig mit dem Gehäuse (2) des Anhänger-Steuerventils ausgebildet ist, ist ein topfförmiges Teil (37, 26) angeordnet. In der Nähe des Bodens (26) weist das topfförmige Teil (37, 26) auf seinem Umfang einen Dichtring auf, der dichtend an der Innenwand des Gehäuses (61) anliegt. Das topfförmige Teil (37, 26) ist in eine in Richtung der Längsachse des Gehäuses (61) verlaufende Gehäusebohrung (32) derart eingesetzt, daß es mit seiner offenen Seite der Gehäusebohrung (32) zugewandt ist und mit seinem Boden (26) das eine Ende der Gehäusebohrung (32) verschließt. Mit seiner offenen Stirnseite liegt das topfförmige Teil (37, 26) an einem ringförmigen Vorsprung der die Gehäusebohrung (32) begrenzenden Wand an. Auf der den Boden (26) aufweisenden Seite des topfförmigen Teiles (37, 26) ist in eine Nut in der die Gehäusebohrung (32) begrenzenden Wand ein Sicherungsring (25) eingeschnappt, der das topfförmige Teil (37, 26) in der Gehäusebohrung (32) hält und zusammen mit dem ringförmigen Vorsprung eine Bewegung des topfförmigen Teiles (37, 26) in Richtung der Längsachse der Gehäusebohrung (32) verhindert.

Dem Boden (26) des topfförmigen Teiles (37, 26) gegenüber ist in der Gehausebohrung (32), quer zur Längsachse der Gehäusebohrung (32) verlaufend, eine Wand (49) angeordnet, welche die Gehäusebohrung (32) in einen das topfförmige Teil (37, 26) aufweisenden ersten Gehäusebohrungsteil und einen auf der anderen Seite der Wand (49) gelegenen zweiten Gehäusebohrungsteil unterteilt.

Im zweiten Gehäusebohrungsteil ist ein als erstes Stellglied für eine Drossel dienender, topfförmig ausgebildeter, abgestufter Drosselsteuerkolben (60) in Richtung der Längsachse der Gehäusebohrung (32) bewegbar angeordnet. Der Drosselsteuerkolben (60) trägt auf seinem Umfang zwei Dichtringe (59, 54), die dichtend an der den zweiten Gehäusebohrungsteil begrenzenden Wand anliegen.

Im Drosselsteuerkolben (60) ist ein Hilfssteuerkolben (70) in Richtung der Längsachse des Drosselsteuerkolbens (60) bewegbar angeordnet. Der Hilfssteuerkolben (70) trägt auf seinem Umfang einen Dichtring (58), welcher dichtend an der Innenwand des Drosselsteuerkolbens (60) anliegt. Die dem Boden (52) des Drosselsteuerkolbens (60) zugewandte Seite des Hilfssteuerkolbens (70) und der Boden (52) des Drosselsteuerkolbens (60) schließen zwischen sich eine erste Teilkammer (65) einer Drosselsteuerkammer (65, 64) für Steuerdruckmittel zur Betätigung des Drosselsteuerkolbens (60) ein. Eine zweite Teilkammer (64) der Drosselsteuerkammer (65, 64) wird von der dem Boden (52) des Drosselsteuerkolbens (60) abgewandten Seite des Hilfssteuerkolbens (70) und einem dieser Seite des Hilfssteuerkolbens (70) gegenüber angeordneten Deckel (63) begrenzt, der die Stirnseite des zweiten Gehäusebohrungs-teiles verschließt. Auf dem Umfang des Deckels (63) ist ein Dichtring (62) angeordnet, welcher dichtend an der den zweiten Gehäusebohrungsteil begrenzenden Wand des zweiten Gehäuses (61) anliegt.

Über einen im wesentlichen quer zur Längsachse des Drosselsteuerkolbens (60) verlaufenden, in der Wand des Drosselsteuerkolbens (60) angeordneten Durchlaß (57) steht die erste Teilkammer (65) der Drosselsteuerkammer (65, 64) mit einer Ringkammer (69) in Verbindung, die wiederum über eine als Gehäusekanal (71) ausgebildete Druckmittelleitung in der Wand des ersten Gehäuses (2) und des zweiten Gehäuses (61) mit der Steuerkammer (3) des Anhänger-Steuerventils verbunden ist. Die Ringkammer (69) wird von dem Bereich der äußeren Mantelfläche des Drosselsteuer-kolbens (60), der zwischen den beiden Dichtringen (59, 54) des Drosselsteuerkolbens (60) gelegen ist, und der Innenwand des zweiten Gehäusebohrungsteiles der Gehäusebohrung (32) begrenzt.

Der Drosselsteuerkolben (60) weist auf seiner der Drosselsteuerkammer (65, 64) abgewandten Seite einen zentrisch angeordneten, abgestuft ausgebildeten, stößelartigen Fortsatz (51, 30) auf, der sich durch eine Durchgangsöffnung (48) in der Wand (49) hindurch in Richtung auf den Boden (26) des topfförmigen Teiles (37, 26) zu erstreckt. Der den größeren Durchmesser aufweisende Teil (51) des Fortsatzes (51, 30) trägt auf seinem Umfang einen Dichtring (50), der dichtend an der die Durchgangsöffnung (48) begrenzenden Wand anliegt.

Auf dem den kleineren Durchmesser aufweisenden Teil (30) des Fortsatzes (51, 30) ist ein vorzugsweise aus Kunststoff oder Gummi hergestellter, als ein zweites Stellglied dienender Drosselkolben (80) in Richtung der Längsachse des Fortsatzes (51, 30) bewegbar angeordnet. Der Drosselkolben (80) wird mittels der Kraft einer Feder (33), die sich an einem auf den freien Endbereich des Fortsatzes (51, 30) aufgeschobenen ringförmigen Körper (31) abstützt, an der von dem den größeren Durchmesser aufweisenden Teil (51) gebildeten, als Anschlag für den Drosselkolben (80) dienenden Schulter (84) des Fortsatzes (51, 30) gehalten. Der ringförmige Körper (31) stützt sich wiederum an einem Sicherungsring ab, der in eine Nut am freien Ende des Fortsatzes (51, 30) eingeschnappt ist.

Das topfförmige Teil (37, 26) weist auf seiner dem Drosselkolben (80) zugewandten Seite einen zylindrischen Bereich (36) auf, an den ein in Richtung auf den Boden (26) des topfförmigen Teiles (37, 26) zu sich konisch verjüngender Bereich (34) anschließt.

Der Drosselkolben (80) ist als rotationssymetrischer Körper ausgebildet mit einem in Richtung der Längsachse des Fortsatzes (51, 30) verlaufenden, zylindrischen mittleren Bereich (38), einem an diesen anschließenden, sich in Richtung auf den Boden (26) des topfförmigen Teiles (37, 26) zu konisch verjüngenden Bereich (79) und einem ebenfalls an den zylindrischen mittleren Bereich (38) anschließenden, sich in Richtung auf die Schulter (84) des Fortsatzes (51, 30) zu konisch verjüngenden Bereich (39).

Der zylindrische Bereich (38) des Drosselkolbens (80) verläuft im wesentlichen parallel zum zylindrischen Bereich (36) des topfförmigen Teiles (37, 26). Ebenfalls verläuft der sich auf den Boden (26) zu konisch verjüngende Bereich (79) des Drosselkolbens (80) im wesentlichen parallel zu dem sich konisch verjüngenden Bereich (34) des topfförmigen Teiles (37, 26).

Der sich konisch verjüngende Bereich (34) des topfförmigen Teiles (37, 26) dient praktisch als Ventilsitz für den die Zusatzfunktion eines Ventilkörpers habenden Drosselkolben (80).

Das topfförmige Teil (37, 26) besitzt eine Einschnürung. In diesem eingeschnürten Bereich sind in der Wand des topfförmigen Teiles (37, 26) wenigstens zwei Durchlässe (29, 27) für Druckmittel angeordnet.

Die äußere Mantelfläche des eingeschnürten Bereiches und die dieser gegenüberliegende, die erste Teilgehäusebohrung begrenzende Wand begrenzen eine Ringkammer (35). Die Ringkammer (35) ist über eine als Gehäusekanal (24) in den Gehäusen (2, 61) ausgebildete Druckmittelleitung mit der Druckmitteleingangskammer (23, 16) des Anhänger-Steuerventils verbunden.

Der erste Gehäusebohrungsteil der Gehäusebohrung (32) ist in eine Eingangskammer (40) und in eine Ausgangskammer (35, 83) unterteilt, wobei die Ausgangskammer (35, 83) auf der dem Boden (26) des topfförmigen Teiles (37, 26) zugewandten Seite des Drosselkolbens (80) gelegen ist und sich aus einer im topfförmigen Teil (37, 26) gelegenen Teilkammer (83) und der Ringkammer (35), die über die in der Wand des topfförmigen Teiles (37, 26) angeordneten Durchlässe (29, 27) mit der Teilkammer (83) verbunden ist, zusammensetzt. Die Eingangskammer (40) ist auf der dem Boden (26) des topfförmigen Teiles (37, 26) abgewandten Seite des Drosselkolbens (80) gelegen. Der zylindrische Bereich (36) und der konische Bereich (34) des topfförmigen Teiles (27, 36) begrenzen einen Durchlaß (87) über den die Eingangskammer (40) mit der Ausgangskammer (35) verbunden ist. Der Durchlaß (87) und der Drosselkolben (80) bilden die Drossel (80, 87).

Über einen am zweiten Gehäuse (61) angeordneten Druckmitteleingang (41), einen Druckmittelleitungsteil (42) einer Anhänger-Vorratsleitung (42, 15) sowie ein Mehrkreisschutzventil (43) und eine Druckmittelleitung (44) ist die Eingangskammer (40) mit einem als Druckmittelquelle für die Bremsanlage dienenden Druckluft-Vorratsbehälter (45) verbunden. Die Ausgangs-kammer (35, 83) ist, wie bereits erwähnt, über den Gehäusekanal (24) mit der Druckmitteleingangskammer (23, 16) des Anhänger-Steuerventils verbunden, wobei der Gehäusekanal (24), bezogen auf die Ausgangskammer (35, 83), der Drosseleinrichtung (81) als Druckmittelausgang und bezogen auf die Druckmitteleingangskammer (23, 16) des Anhänger-Steuerventils (82), als Druckmitteleingang angesehen werden kann.

Der Fortsatz (51, 30) des Drosselsteuerkolbens (60) weist eine in Richtung seiner Längsachse verlaufende Sackbohrung (28) auf, die sich von dem freien Ende des Fortsatzes (51, 30) ausgehend in diesen hineinerstreckt. An den im Fortsatz (51, 30) befindlichen Endbereich der Sackbohrung (28) schließt eine quer zur Längsachse des Fortsatzes (51, 30) verlaufende Bohrung (47) an, die sich bis zur äußeren Mantelfläche des Fortsatzes (51, 30) hin erstreckt. Die Sachbohrung (28) und die Bohrung (47) bilden einen Drosselkanal (28, 47), über welchen die Ausgangskammer (35, 83) mit der Eingangskammer (40) ständig verbunden ist.

Über die aus dem Drosselkolben (80) und dem Durchlaß (87) bestehende Drossel (80, 87) steht die Ausgangskammer (35, 83) mit der Eingangskammer (40) in Verbindung. Die Größe des Durchlaßquerschnittes (X) des Durchlasses der Drossel (80, 87) wird bestimmt durch den Abstand zwischen dem konischen Bereich (79) des Drosselkolbens (80) und dem diesen gegenüberliegenden konischen Bereich (34) des topfförmigen Teiles (37, 26) sowie dem Abstand zwischen dem zylindrischen Bereich (38) des Drosselkolbens (80) und dem diesem genenüberliegenden zylindrischen Bereich (36) des topfförmigen Teiles (37, 26). Dem Durchlaß zugerechnet werden muß bei der vorliegenden Ausführungsform der Drossel (80, 87) jedoch noch der Drosselkanal (28, 47).

Werden an dem konischen Bereich (79) des Drosselkolbens (80) oder an dem konischen Bereich (34) des topfförmigen Teiles (37, 26) sich jeweils auf das andere Bauteil zu erstreckende Vorsprünge vorgesehen, welche einen Mindestabstand zwischen den beiden Bauteilen (Drossel-kolben - topfförmiges Teil) gewährleisten, so kann auf einen zusätzlichen Drosselkanal verzichtet werden, da bei einer solchen Ausführungsform der Drossel (80, 87) immer ein Spalt zwischen dem Drosselkolben (80), der auch die Funktion eines Ventilkörpers hat, und dem mit einem Ventilsitz (konischer Bereich des topfförmigen Teiles) versehenen topfförmigen Teil (37, 26) verbleibt.

Der Drosselsteuerkolben (60) besitzt auf seiner dem Drosselkolben (80) abgewandten Seite einen zentrisch angeordneten Stift (67), der in Richtung der Längsachse des Hilfssteuerkolbens (70) verlaufend sich in Richtung auf die zweite Teilkammer (64) zu erstreckt. Der Stift (67) ist durch eine zentrisch im Hilfssteuerkolben (70) und in einem Fortsatz (68) des Hilfssteuerkolbens (70) angeordnete Bohrung (66) hindurchgeführt. Der Stift (67) ist in seiner axialen Erstreckung so bemessen, daß er über den gesamten Hub des Hilfssteuerkolbens (70) wenigstens innerhalb des im Fortsatz (68) gelegenen Bereiches der Bohrung (66) verbleibt. Der Querschnitt des Stiftes (67) und der Querschnitt der Bohrung (66) sind so bemessen, daß zwischen der Mantelfläche des Stiftes (67) und der die Bohrung (66) begrenzenden Wand ein Ringspalt (85) verbleibt, über welchen die erste Teilkammer (65) mit der zweiten Teilkammer (64) der Drosselsteuerkammer (64, 65) ständig verbunden ist. Der Stift (67) bildet so mit der Bohrung (66) im Hilfssteuerkolben (69) und im Fortsatz (68) eine Festdrossel (67, 66, 85) zum drosseln eines Druckmittelstromes von der ersten Teilkammer (65) zur zweiten Teilkammer (64) hin und umgekehrt.

Das Anhänger-Steuerventil besitzt einen koaxial zum Relaiskolben (4) angeordneten zweiten Relaiskolben und eine von diesem begrenzte weitere Steuerkammer, die über eine Druckmittelleitung mit einem Druckmittelausgang des Motorwagen-Bremsventils (55) verbunden ist. Der weitere Relaiskolben steht mit dem Relaiskolben (4) in Wirkverbindung und dient zur Betätigung des kombinierten Einlaß- und Auslaßventils (10, 11, 12), wenn bei betätigten Motorwagen-Bremsventil (55) kein Steuerdruckmittel in die Steuerkammer (3) gelangt, bedingt z. B. durch einen Defekt am Proportionalventil (73). Bei intaktem Proportionalventil (73) wird bei Betätigung des Motorwagen-Bremsventils (55) sowohl in die Steuerkammer (3) als auch in die weitere Steuerkammer Steuerdruck aus zwei verschiedenen Bremskreisen eingesteuert. Der weitere Relaiskolben wird von den Drücken in den beiden Steuerkammern im Gleichgewicht gehalten. Das kombinierte Einlaß- und Auslaßventil (10, 11, 12) wird dann vom Relaiskolben (4) betätigt.

Der Drosselsteuerkolben (60) wird von einer Feder (53) in Richtung auf die zweite Teilkammer (64) zu beaufschlagt, wobei die Feder (53) sich an der Wand (49) abstützt.

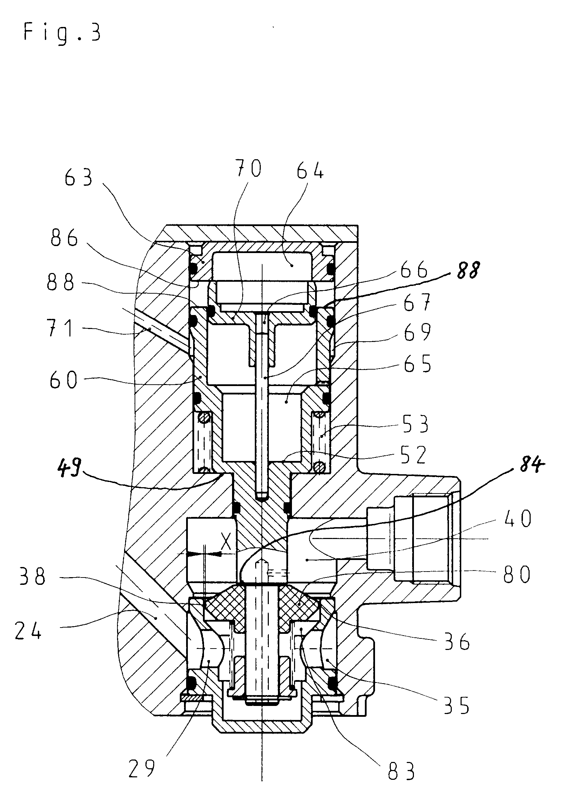

In den Figuren 2 und 3 ist die Drosseleinrichtung in ihrer ersten Betriebsstellung und in ihrer zweiten Betriebsstellung bei einem Bremsvorgang bei intakter Anhänger-Bremsleitung dargestellt.

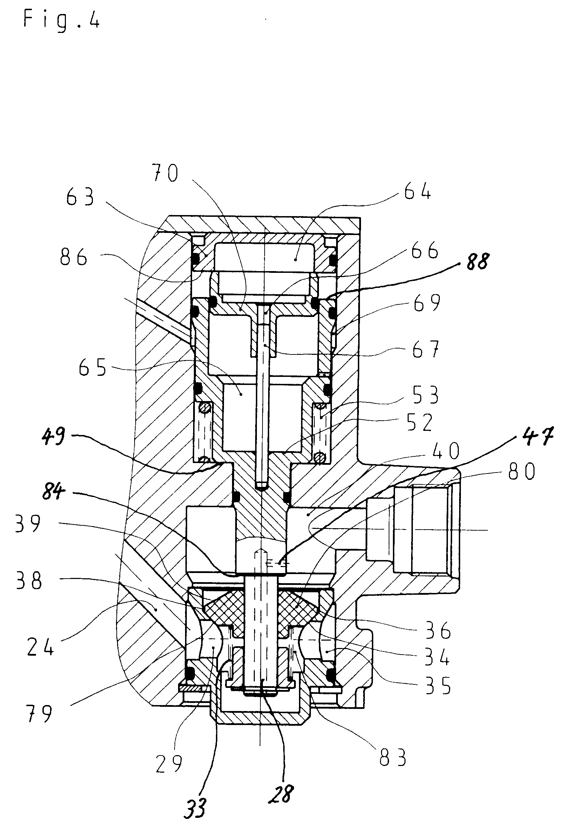

Figur 4 zeigt die Drosseleinrichtung bei defekter Anhänger-Bremsleitung bei einem Bremsvorgang.

Der besseren Übersicht halber sind die den in Figur 1 gezeigten Bauteilen gleichen Bauteile der Figuren 2 bis 4 mit gleichen Bezugsziffern wie in Figur 1 versehen.

Die in den Figuren 2, 3 und 4 gezeigte Drosseleinrichtung weist einen Aufbau auf, der identisch ist mit dem Aufbau der Drosseleinrichtung gemäß Figur 1. Aus diesem Grund wird lediglich auf die in den Figuren 2 bis 4 gezeigten unterschiedlichen Schaltstellungen der Drosseleinrichtung eingegangen.

Die Funktion des vorstehend beschriebenen, in einer Zweileitungs-Bremsanlage angeordneten Anhänger-Steuerventils mit Drosseleinrichtung wird nachfolgend näher erläutert.

Im Ruhezustand steht Vorratsdruckluft aus dem Leitungsteil (42) der Anhänger-Vorratsleitung (42, 15) (dritter Bremskreis bzw. Anhänger-Bremskreis) des Zugfahrzeugs über den Druckmitteleingang (41) in der Eingangskammer (40) und in der Ausgangskammer (83, 35) der Drossel (80, 87) der Drosseleinrichtung (81) sowie über den Gehäusekanal (24) in der Druckmitteleingangskammer (23, 16) des Anhänger-Steuer-ventils (82) und schließlich über den Druckmittelanschluß (17) des Anhänger-Steuerventils (82) in dem Leitungsteil (15) der Anhänger-Vorratsleitung (42, 15) an. Der Relaiskolben (4) und der Steuerkolben (14, 19, 21) des Anhänger-Steuerventils (82) sowie der Drosselsteuerkolben (60), der Hilfssteuerkolben (70) und der Drosselkolben (80) der Drosseleinrichtung (81) befinden sich in der in Fig. 1 gezeigten Stellung.

Bei Betätigen des Motorwagen-Bremsventils (55) gelangt vom Signalgeber (78) des Motorwagen-Bremsventils (55) über die elektrische Steuerleitung (56) ein von der Stellung der Trittplatte abhängiges oder ein dem vom Motorwagen-Bremsventil (55) ausgesteuerten Druck proportionales elektrisches Signal auf den Elektromagneten (72) des Proportionalventils (73). Das Proportionalventil (73) steuert jetzt einen Druck aus, der dem Druck in der Bremsanlage des Zugfahrzeugs entspricht. Der vom Proportionalventil (73) ausgesteuerte Druck gelangt über den Steuereingang (75) in die Steuerkammer (3) des Anhänger-Steuerventils (82). Der sich in der Steuerkammer (3) aufbauende Druck verschiebt den Relaiskolben (4) in Richtung auf den Steuerkolben (14, 19, 21) zu. Dabei setzt der Ventilsitz (10) auf das Ventilglied (12) auf. Das Auslaßventil (10, 12) ist jetzt geschlossen und das Einlaßventil (11, 12) gelangt bei der weiteren Abwärtsbewegung des Relaiskolbens (4) in die Offenstellung. Die in der Ausgangskammer (83, 35) der Drosseleinrichtung (81) und in der Druckmitteleingangskammer (23, 16) des Anhänger-Steuerventils (82) anstehende Druckluft gelangt durch das geöffnete Einlaßventil (11, 12) des kombinierten Einlaß- und Auslaßventils (10, 11, 12) in die Druckmittelausgangs-kammer (8) und weiter durch den als Druckmittelausgang (9) dienenden Druckmittelanschluß und die Anhänger-Brems-leitung (7) zum hier nicht gezeigten Anhängerbremsventil des Anhängers.

Von dem vor der Drosseleinrichtung (81) gelegenen Leitungsteil (42) der Anhänger-Vorratsleitung (42, 15) des Zugfahrzeugs strömt Druckluft über die Eingangskammer (40), den Durchlaß (87) und die Ausgangskammer (83, 29, 35) der Drosseleinrichtung (81) sowie den Gehäusekanal (24) in die Druckmitteleingangskammer (23, 16) des Anhänger-Steuerventils (82) nach. Dieses Nachströmen der Druckluft erfolgt zu Beginn des Bremsvorgangs ungedrosselt. Der Durchlaßquerschnitt (X) der Drossel (80, 87) der Drosseleinrichtung (81) hat jetzt sein größtmögliches Maß, d. h., die Drossel (80, 87) befindet sich in ihrer ungedrosselten ersten Betriebsstellung.

Über die vom Gehäusekanal (71) gebildete Druckmittelleitung, die Ringkammer (69) sowie den Durchlaß (57) in der Wand des Drosselsteuerkolbens (60) gelangt Druckluft aus der Steuerkammer (3) des Anhänger-Steuerventils (82) in die erste Teilkammer (65) der Drosseleinrichtung (81). Der sich in der ersten Teilkammer (65) aufbauende Steuerdruck für die Drosseleinrichtung (81) bewirkt eine Bewegung des Hilfssteuerkolbens (70) in Richtung auf die zweite Teilkammer (64) der Drosseleinrichtung (81) zu, und zwar soweit, bis dieser an dem vom Deckel (63) gebildeten gehäusefesten Anschlag (86) zur Anlage kommt, wie in Fig. 2 dargestellt. Diese Bewegung des Hilfssteuerkolbens (70) wird dadurch bewirkt, daß Druckluft von der ersten Teilkammer (65) über den Ringspalt (85) zwischen dem Stift (67) und der im Hilfssteuerkolben (70) befindlichen Bohrung (66) nur gedrosselt in die als Hilfssteuerkammer dienende zweite Teilkammer (64) gelangt und sich aus diesem Grund der Druckaufbau in der zweiten Teilkammer (64) langsamer vollzieht als der Druckaufbau in der ersten Teilkammer (65).

Die von der Druckluft in der ersten Teilkammer (65) beaufschlagte Wirkfläche (52) des Drosselsteuerkolbens (60) ist so bemessen, daß die Kraft des Druckes in der ersten Teilkammer (65) nicht ausreicht, um die dieser Kraft entgegengerichtete Kraft der den Drosselsteuerkolben (60) beaufschlagenden Feder (53) zu überwinden. Der Drosselsteuerkolben (60) verbleibt solange in seiner als Ausgangsposition dienenden ersten Betriebsstellung, in welcher die Drossel (80, 87) sich in ihrer nicht drosselnden ersten Betriebsstellung befindet, bis der Druck in der zweiten Teilkammer (64) die Höhe des Druckes in der ersten Teilkammer (65) erreicht hat.

Der Drosselkolben (80) verändert seine Lage nicht, da seine der Eingangskammer (40) zugewandte Anströmfläche genauso groß ist wie seine der Ausgangskammer (83, 35) zugewandte Abströmfläche und die Feder (33) den Drosselkolben (80) in Richtung auf die Eingangskammer (40) zu belastet und weil der Durchlaßquerschnitt (X) der Drossel (80, 87) in der ersten Betriebsstellung des Drosselsteuerkolbens (60) so bemessen ist, daß der Druckluftstrom von der Eingangskammer (40) zur Ausgangskammer (83, 35) den Drosselkolben (80) nicht in eine den Durchlaßquerschnitt (X) der Drossel (80, 87) verringernde Position bringen kann.

Der Druck in der zweiten Teilkammer (64) wirkt zusätzlich auf eine die zweite Teilkammer (64) begrenzende Ringfläche (88) des Drosselsteuerkolbens (60) entgegen der Kraft der Feder (53) ein. Dadurch, daß zusätzlich zu der Wirkfläche (52) des Drosselsteuerkolbens (60) die Ringfläche (88) des Drosselsteuerkolbens (60) mit der in die zweite Teilkammer (64) einströmenden Druckluft beaufschlagt wird, nimmt die von dem Steuerdruck in der ersten Teilkammer (65) und in der zweiten Teilkammer (64) auf den Drosselsteuerkolben (60) ausgeübte Kraft mit zunehmenden Druckanstieg in der zweiten Teilkammer (64) zu. Hat der Druck in der zweiten Teilkammer (64) die Höhe des Druckes in der ersten Teilkammer (65) erreicht, so daß ein Kräftegleichgewicht zwischen den einander entgegengerichtet auf den Hilfssteuerkolben (70) einwirkenden Kräften erreicht ist, wird die auf den Drosselsteuerkolben (60) einwirkende Kraft des Steuerdruckes in der Drosselsteuerkammer (65, 64) größer als die entgegengerichtet auf den Drosselsteuerkolben (60) einwirkende Kraft der Feder (53). Die jetzt mit Druck beaufschlagte Fläche des Drosselsteuerkolbens (60) ist jetzt um die Ringfläche (88) des Drosselsteuerkolbens (60) vergrößert. Der Drosselsteuerkolben (60) wird vom Steuerdruckmittel in Richtung auf die als Anschlag für den Drosselsteuerkolben (60) dienende Wand (49) zu verschoben und kommt an dieser zur Anlage. Dabei taucht der auf dem Fortsatz (51, 30) des Drosselsteuerkolbens (60) angeordnete Drosselkolben (80), welcher am Anschlag (84) des Drosselsteuerkolbens (60) anliegt, und somit vom Drosselsteuerkolben (60) mitgenommen worden ist, in den zylindrischen Bereich (36) des topfförmigen Teiles (37, 26) ein. Der Drosselsteuerkolben (60) und der Drosselkolben (80) befinden sich jetzt in ihrer zweiten Betriebsstellung. Die Drossel (80, 87) befindet sich dann in ihrer definierten gedrosselten zweiten Betriebsstellung, wie in Fig. 3 dargestellt ist.

Dadurch, daß der Drosselkolben (80) in den zylindrischen Bereich (36) des topfförmigen Teiles (37, 26) eingetaucht ist, verringert sich der Durchlaßquerschnitt (X) des Durchlasses (87) der Drossel (80, 87) auf die Größe eines Ringspalts, der von der äußeren Mantelfläche des zylindrischen Bereiches (38) des Drosselkolbens (80) und der Wand des zylindrischen Bereiches (36) des topfförmigen Teiles (37, 26) begrenzt wird. Dieser Spalt ist so bemessen, daß der nach dem Einleiten des Bremsvorgangs sich beruhigende Druckluftstrom von der Eingangskammer (40) zur Ausgangskammer (83, 29, 35) der Drosseleinrichtung (81) nicht in der Lage ist, den Drosselkolben (80) gegen die Kraft der Feder (33) auf den als Ventilsitz dienenden konischen Bereich (34) des topfförmigen Teiles (37, 26) zu drücken und so den Durchlaßquerschnitt der Drossel (80, 87) auf einen Wert annähernd 0 zu verringern.

Gleichzeitig mit den im vorstehenden beschriebenen Vorgängen in der Drosseleinrichtung (81) baut sich der Druck in der Druckmittelausgangskammer (8) des Anhänger-steuerventils (82) weiter auf. Der Druck in der Druckmittelausgangskammer (8) des Anhänger-Steuerventils (82) beaufschlagt die der Steuerkammer (3) des Anhänger-Steuerventils (82) abgewandte Seite des Relaiskolbens (4) und bewegt diesen gegen die vom Druck in der Steuerkammer (3) auf den Relaiskolben (4) einwirkende, entgegengerichtete Kraft in Richtung auf die Steuerkammer (3) zu. Das Einlaßventil (11, 12) des kombinierten Einlaß- und Auslaßventils (11, 12, 10) gelangt in die Schließstellung. Eine Abschlußstellung des Anhänger-Steuerventils (82) ist erreicht.

Soll der Bremsvorgang beendet werden, so wird die Steuerkammer (3) des Anhänger-Steuerventils (82) auf ein vom Signalgeber (78) des Motorwagen-Bremsventils (55) erzeugtes Signal hin über das Proportionalventil (73) entlüftet. Der Relaiskolben (4) bewegt sich in Richtung auf die Steuerkammer (3) zu, wobei der Ventilsitz (10) vom Ventilglied (12) des kombinierten Einlaß- und Auslaßventils (10, 12, 11) abhebt. Das Auslaßventil (10, 12) des kombinierten Einlaß- und Auslaßventils (10, 11, 12) gelangt in die Offenstellung. Die Druckmittelaus-gangskammer (8) des Anhänger-Steuerventils (82) und somit auch die Anhänger-Bremsleitung (7) werden über den Druckmittelauslaß (22) zur Atmosphäre hin entlüftet. Gleichzeitig mit diesem Vorgang baut sich der Druck in der ersten Teilkammer (65) und in der zweiten Teilkammer (64) der Drosseleinrichtung (81) über den Kanal (71) die Steuerkammer (3) des Anhänger-Steuerventils (82) und das Proportionalventil (73) zur Atmosphäre hin ab. Die Feder (53) schiebt den Drosselsteuerkolben (60) so weit nach oben, in Richtung auf die zweite Teilkammer (64) zu, bis dieser am Anschlag (86) zur Anlage kommt. Mittels der Kraft der Feder (33) wird der Drosselkolben (80) in Richtung auf die Eingangskammer (40) der Drosseleinrichtung (81) zu verschoben und kommt am Anschlag (84) des Drosselsteuerkolbens (60) zur Anlage. Der Drosselsteuerkolben (60) und auch der Drosselkolben (80) befinden sich dann wieder in ihrer Ausgangsstellung. Der Drosselkolben (80) hat seine erste Betriebsstellung eingenommen, in welcher die Drossel (80, 87) sich in ihrer ungedrosselten Betriebsstellung befindet, wie in den Figuren 1 und 2 dargestellt.

Wird eine Betriebsbremsung durchgeführt, nachdem die Anhänger-Bremsleitung (7) defekt geworden, im Extremfall gerissen ist, oder tritt ein Defekt an der Anhänger-Bremsleitung (7) während einer Betriebsbremsung auf, so sinkt der Druck in der Druckmittelausgangskammer (8) sowie in der Druckmitteleingangskammer (23, 16) des Anhänger-Steuerventils (82) und damit auch in der Ausgangskammer (83, 29, 35) der Drosseleinrichtung (81) ab. Verursacht wird das Absinken des Druckes in den besagten Kammern dadurch, daß der Druck in der Druckmitteleingangskammer (23, 16) des Anhänger-Steuerventils (82) sich über das Einlaßventil (11, 12) des kombinierten Einlaß- und Auslaßventils (11, 12, 10) sowie die Druckmittelausgangskammer (8) und die defekte Stelle an der Anhänger-Bremsleitung (7) schnell abbaut.

Der Abfall des Druckes in der Druckmitteleingangskammer (23, 16) des Anhänger-Steuerventils bewirkt, wie bereits erwähnt, auch einen Druckabfall in der Ausgangskammer (29, 83, 35) der Drosseleinrichtung (81).

Der Durchlaßquerschnitt (X) der Drossel (80, 87) ist in der zweiten Betriebsstellung des Drosselsteuerkolbens (60) und somit auch des Drosselkolbens (80) so bemessen, daß bei unbeschädigter Anhänger-Bremsleitung (7), nach dem Einleiten eines Bremsvorgangs, die Druckluft aus der Eingangskammer (40) der Drosseleinrichtung (81) genauso schnell in die Ausgangskammer (83, 29, 35) der Drosseleinrichtung (81) nachströmt, wie Druckluft aus der Ausgangskammer (83, 29, 35) abströmt, so daß das Gleichgewicht zwischen der vom Druck in der Eingangskammer (40) auf den Drosselkolben (80) ausgeübten Kraft und der dieser Kraft entgegengerichtet, vom Druck in der Ausgangskammer (83, 29, 35) und von der Feder (33) auf den Drosselkolben (80) ausgeübten Kraft besteht und der Drosselkolben (80) seine Lage nicht verändert.

Durch das bei einem Defekt der Anhänger-Bremsleitung (7) durch den Druckabfall am Ausgang (24) der Drossel (80, 87) entstehende Druckgefälle zwischen dem Druck am Eingang (41) und dem Druck am Ausgang (24) der Drossel (80, 87) überwiegt die auf den als Anströmfläche dienenden, sich konisch verjüngenden Bereich (39) des Drosselkolbens (80) einwirkende Kraft des Druckes in der Eingangskammer (40) gegenüber der vom Druck in der Ausgangskammer (83, 29, 35) entgegengerichtet auf den als Abströmfläche dienenden Bereich des Drosselkolbens (80) ausgeübten Kraft und der von der Feder (33) in Kraftrichtung des Druckes in der Ausgangskammer (83, 29, 35) auf den Drosselkolben (80) ausgeübten Kraft.

Dadurch bewegt sich der Drosselkolben (80) in Richtung auf den als Ventilsitz dienenden, sich konisch verjüngenden Bereich (34) des topfförmigen Teiles (37, 26) zu und kommt mit seinem sich in Richtung auf die Ausgangskammer (83, 29, 35) zu konisch verjüngenden Bereich (79) an diesem zur Anlage. Der vom Drosselkolben (80) und dem zylindrischen Bereich (36) sowie dem konischen Bereich (34) des topfförmigen Teiles (37, 26) begrenzte Durchlaß (X) ist jetzt verschlossen. Von der Eingangskammer (40) gelangt dann nur noch über die im Fortsatz (51, 30) des Drosselsteuerkolbens (60) angeordnete Drosselbohrung (47, 28) Druckluft zur Ausgangskammer (83, 29, 35) der Drosseleinrichtung (81).

Die weitere Belüftung der Ausgangskammer (83, 29, 35) und somit auch der über den Gehäusekanal (24) mit dieser verbundenen Druckmitteleingangskammer (23, 16) des Anhänger-Steuerventils (82) erfolgt jetzt nur noch gedrosselt über den von der Drosselbohrung (47, 28) gebildeten verringerten Durchlaßquerschnitt der Drosseleinrichtung (81). Jetzt kann sich der Druck in dem zum Anhängerfahrzeug führenden, hinter der Drossel (80, 87) gelegenen Leitungsteil der Anhänger-Vorratsleitung (42, 15) über das Einlaßventil (11, 12) des kombinierten Einlaß- und Auslaßventils (11, 12, 10) und die defekte Anhänger-Bremsleitung (7) schnell abbauen.

Die Drossel (80, 87) ist so dimensioniert, daß nach Abriß der Anhänger-Bremsleitung (7) der Druck in der Anhänger-Vorratsleitung (42, 15) innerhalb von zwei Sekunden nach dem Betätigen des Motorwagen-Bremsventils auf einen vorgegebenen Wert, z. B. 1,5 bar nach den europäischen ICE-Regeln abgesunken ist. Da das auf dem Anhängerfahrzeug angeordnete Anhänger-Bremsventil so aufgebaut ist, daß es durch einen Druckabfall der genannten Art in der Anhänger-Vorratsleitung (42, 15) automatisch in einen eine Anhänger-Bremsung auslösenden Betriebszustand umgeschaltet wird, führt der oben unterstellte Abriß der Anhänger-Bremsleitung (7) bei einer Betriebsbremsung des Motorfahrzeugs zur Zwangsbremsung des Anhängerfahrzeugs.

Nach dem Beheben des Defektes an der Anhänger-Bremsleitung (7) arbeitet die Drosseleinrichtung (81) wieder so, wie eingangs beschrieben.

Anstelle der von der Bohrung (66) im Hilfssteuerkolben (70) und dem Stift (67) gebildeten zweiten Drossel (66, 67) kann auch eine Drossel in der von der Steuerkammer (3) des Anhänger-Steuerventils (82) zur ersten Teilkammer (65) der Drosseleinrichtung (81) führenden Druckmittelleitung (71) vorgesehen werden. In einem solchen Fall kann auf die Anordnung eines Hilfssteuerkolbens (70) sowie die dadurch bedingte zweite Teilkammer (64) verzichtet werden.

Im Ausführungsbeispiel ist der Drosselkolben (80) als Ventilkörper ausgebildet, welcher mit einem Ventilsitz zusammenwirkt. Es ist selbstverständlich auch möglich, ein vom Drosselkolben (80) getrennt angeordnetes, vom Drosselkolben (80) betätigbares Ventil vorzusehen, welches z. B. aus einem nach Art eines Schiebers ausgebildeten Ventilglied bestehen kann, welches am Druckmittelausgang der Ausgangskammer (83, 29, 35) vorbei führbar ist und nach Art einer Blende wirkt.

Zur Betätigung des Drosselkolbens (80) kann anstelle eines Drosselsteuerkolbens auch ein andersartig ausgebildetes Stellglied Verwendung finden. Dieses andersartig ausgebildete Stellglied kann der Anker eines Elektromagneten sein, welcher bei Anlegen einer Spannung an den Elektromagneten den Drosselkolben (80) von seiner ersten Betriebsstellung in seine zweite Betriebsstellung bringt. Das elektrische Schaltsignal kann der Elektromagnet von dem Signalgeber (78) des Motorwagen-Bremsventils (55) bekommen. Um bei Einleiten eines Bremsvorgangs den Drosselkolben (80) verzögert in seine Schaltstellung zu bringen, müßte in die vom elektrischen Signalgeber (78) des Motorwagen-Bremsventils (55) zum Elektromagneten führende elektrische Steuerleitung ein Zeitverzögerungsglied geschaltet werden.

Das Gehäuse der Drosseleinrichtung (81) kann mit dem Gehäuse des Anhänger-Steuerventils (82), wie in der Zeichnung dargestellt, einstückig ausgebildet sein. Es ist aber auch möglich das Gehäuse der Drosseleinrichtung (81) als ein vom Gehäuse des Anhänger-Steuerventils (82) unabhängiges Gehäuse auszubilden, so daß die Drosseleinrichtung (81) vom Anhänger-Steuerventil (82) getrennt in einer zum Druckmitteleingang des Anhänger-Steuerventils (82) führenden Druckmittelleitung angeordnet werden oder an das Gehäuse eines Anhänger-Steuerventils angeflanscht werden kann.

Die Druckmitteleingangskammer (23, 16) der als Anhänger-Steuerventil ausgebildeten Steuerventileinrichtung (82) bildet einen Verzweigungspunkt der Anhänger-Vorratsleitung (42, 15), von dem aus das Bremssystem des Anhängerfahrzeugs mit Vorratsdruckluft gespeist wird. Die veränderbare Drossel (80, 87) ist zwischen der Druckluftquelle (45, 43) des Zugfahrzeugs und diesem Verzweigungspunkt angeordnet. Es ist auch denkbar, den Ausgang (24) der Drosseleinrichtung (81) direkt mit dem Leitungsteil (15) der Anhänger-Bremsleitung (42, 15) zu verbinden und zwischen der Druckmitteleingangskammer (23, 16) der Steuerventileinrichtung (82) und dem Ausgang (24) der Drosseleinrichtung (81) eine zusätzliche Druckmittelleitung vorzusehen. In diesem Fall wäre der Ausgang (24) der Drosseleinrichtung (81) der Verzweigungspunkt.

## Patentansprüche

1. Druckluftbetätigte Zweileitungsbremsanlage mit folgenden Merkmalen :
a) es ist eine zwischen einer Druckluftquelle (45, 43) eines Zugfahrzeugs und einem Anhängerfahrzeug angeordnete Anhänger-Vorratsleitung (42, 15) für Druckluft vorgesehen;
b) es ist eine Steuerventileinrichtung (82) zur Speisung einer zwischen dem Zugfahrzeug und dem Anhängerfahrzeug angeordneten Anhänger-Bremsleitung (7) mit Druckluft aus dem zugfahrzeugseitigen Teil (42) der Anhänger-Vorratsleitung (42, 15) vorgesehen;
c) zwischen der Druckluftquelle (45, 43) des Zugfahrzeugs und einem Verzweigungspunkt der Anhänger-Vorratsleitung (42, 15), von dem aus ein Bremssystem des Anhängerfahrzeugs mit Vorratsdruckluft gespeist wird, ist eine veränderbare Drossel (80, 87) angeordnet;
d) zur Betätigung der Drossel (80, 87) ist ein erstes Stellglied (60) vorgesehen, das während einer Druckluft-Beaufschlagung der Anhänger-Bremsleitung (7) betätigbar ist;
gekennzeichnet durch die folgenden Merkmale:
e) die Drossel (80, 87) ist so ausgebildet, daß sie mittels des ersten Stellgliedes (60) aus einer ungedrosselten ersten Betriebsstellung in eine definierte gedrosselte zweite Betriebsstellung bringbar ist;
f) es ist ein zweites Stellglied (80) vorgesehen, mittels welchem die Drossel (80, 87) in Abhängigkeit von der Differenz der Drücke an ihrem Eingang (41) und ihrem Ausgang (24) aus der zweiten Betriebsstellung heraus in eine Stellung mit verringertem Durchlaßquerschnitt bringbar ist.

2. Druckluftbetätigte Zweileitungsbremsanlage nach Anspruch 1, gekennzeichnet durch die folgenden Merkmale:
a) das zweite Stellglied (80) ist relativ zu einem eine Eingangskammer (40) der Drossel (80, 87) mit einer Ausgangskammer (83, 29, 35) der Drossel (80, 87) verbindenden Durchlaß (87) der Drossel (80, 87) bewegbar so angeordnet, daß es bei einer Bewegung auf den Durchlaß (87) zu dessen Durchlaßquerschnitt (X) verringert;
b) die Eingangskammer (40) ist über einen Eingang (41) der Drossel (80, 87) mit einem vor der Drossel (80, 87) gelegenen Leitungsteil (42) der Anhänger-Vorratsleitung (42, 15) verbunden und die Ausgangskammer (83, 29, 35) ist über einen Ausgang (27) der Drossel (80, 87) mit einem hinter der Drossel (80, 87) gelegenen Leitungsteil (15) der Anhänger-Vorratsleitung (42, 15) verbunden;
c) es ist eine Feder (33) vorgesehen, welche das zweite Stellglied (80) in Richtung auf die Eingangskammer (40) zu beaufschlagt;
d) die Feder (33) ist so ausgelegt und der Durchlaßquerschnitt des Durchlasses (87) ist in der zweiten Betriebsstellung der Drossel (80, 87) so bemessen, daß das zweite Stellglied (80) vom Druckmittel in der Eingangskammer (40) gegen die Kraft der Feder (33) von der zweiten Betriebsstellung in die dritte Betriebsstellung der Drossel (80, 87), in welcher der Durchlaßquerschnitt des Durchlasses (87) sehr klein oder gesperrt ist, gebracht wird, wenn in der Ausgangskammer (83, 35) ein Druckabfall gegenüber dem Druck in der Eingangskammer (40) auftritt.

3. Druckluftbetätigte Zweileitungsbremsanlage nach wenigstens einem der vorhergehenden Ansprüche, dadurch gekennzeichnet, daß das zweite Stellglied als Drosselkolben (80) ausgebildet ist.

4. Druckluftbetätigte Zweileitungsbremsanlage nach wenigstens einem der vorhergehenden Ansprüche, dadurch gekennzeichnet, daß die Drossel (80, 87) von dem Drosselkolben (80) und dem Durchlaß (87) gebildet wird.

5. Druckluftbetätigte Zweileitungsbremsanlage nach wenigstens einem der vorhergehenden Ansprüche, dadurch gekennzeichnet,daß die Drossel von einem vom Drosselkolben (80) betätigbaren Drosselglied und einem Durchlaß gebildet wird.

6. Druckluftbetätigte Zweileitungsbremsanlage nach wenigstens einem der vorhergehenden Ansprüche, gekennzeichnet durch die folgenden Merkmale:
a) das erste Stellglied wird von einem Drosselsteuerkolben (60) gebildet, der vom Steuerdruck in einer Drosselsteuerkammer (65, 64) gegen die Kraft einer Feder (53) in Richtung auf den Durchlaß (87) zu bewegbar ist;
b) es ist ein den Hub des Drosselsteuerkolbens (60) in Richtung auf den Durchlaß (87) zu begrenzender Anschlag (49) vorgesehen;
c) der Drosselsteuerkolben (60) ist so ausgebildet, daß er bei Beaufschlagung mit Steuerdruckmittel den Drosselkolben (80) von seiner ersten Betriebsstellung in seine zweite Betriebsstellung bringt;
d) die Drosselsteuerkammer (65, 64) ist über eine Druckmittelleitung (71) mit der Steuerkammer (3) der Steuerventileinrichtung (82) verbunden.

7. Druckluftbetätigte Zweileitungsbremsanlage nach wenigstens einem der vorhergehenden Ansprüche, gekennzeichnet durch die folgenden Merkmale:
a) das erste Stellglied (60) ist in Richtung auf den Durchlaß (87) bzw. auf die Ausgangskammer (83, 29, 35) zu bzw. von dieser weg bewegbar angeordnet;
b) es sind den Hub des ersten Stellgliedes (60) in Richtung auf den Durchlaß (87) bzw. auf die Ausgangskammer (83, 29, 35) zu begrenzende Mittel vorgesehen;
c) der Drosselkolben (80) ist auf dem ersten Stellglied (60) in Richtung der Längsachse des ersten Stellgliedes (60) verschiebbar angeordnet;
d) am ersten Stellglied (60) ist ein Anschlag (84) für den Drosselkolben (80) angeordnet, welcher den Weg für den Drosselkolben (80) in Richtung auf die Eingangskammer (40) der Drossel (80, 87) zu begrenzt;
e) der Anschlag (84) ist so angeordnet und die Mittel zum Begrenzen des Hubes des ersten Stellgliedes (60) sind so bemessen, daß der Drosselkolben (80) sich in seiner zweiten Betriebsstellung befindet, wenn er am Anschlag (84) des ersten Stellgliedes (60) anliegt und das erste Stellglied einen Hub in Richtung auf den Durchlaß (87) bzw. auf die Ausgangskammer (83, 29, 35) der Drossel (80, 87) zu ausgeführt hat.

8. Druckluftbetätigte Zweileitungsbremsanlage nach wenigstens einem der vorhergehenden Ansprüche, gekennzeichnet durch die folgenden Merkmale:
a) der Drosselsteuerkolben (60) weist einen sich bis in die Ausgangskammer (83, 35) der Drossel (80, 87) hineinerstreckenden, abgestuften Fortsatz (51, 30) auf, wobei auf dem den geringeren Durchmesser aufweisenden Teil (30) des Fortsatzes (51, 30) der Drosselkolben (80) in Richtung der Längsachse des Fortsatzes (51, 30) verschiebbar angeordnet ist;
b) es ist eine Feder (33) vorgesehen, welche sich an einem Teil (31) des Fortsatzes (51, 30) abstützt und den Drosselkolben (80) an der als Anschlag (84) dienenden Stufe des Fortsatzes (51, 30) hält;
c) der Anschlag (84) für den Drosselkolben (80) und der Anschlag (48) für den Drosselsteuerkolben (60) sind so angeordnet und der Drosselkolben (80) ist so bemessen, daß beim zur Anlage kommen des Drosselsteuerkolbens (60) an seinem zugeordneten Anschlag (49) sich der Drosselkolben (80) in seiner zweiten Betriebsstellung befindet, in welcher der Durchlaßquerschnitt (X) des Durchlasses (87) verringert ist.

9. Druckluftbetätigte Zweileitungsbremsanlage nach Anspruch 8, dadurch gekennzeichnet, daß der Fortsatz (51, 30) eine Drosselbohrung (47, 28) aufweist, über welche die Eingangskammer (40) mit der Ausgangskammer (83, 35) ständig verbunden ist.

10. Druckluftbetätigte Zweileitungsbremsanlage, nach wenigstens einem der vorhergehenden Ansprüche, dadurch gekennzeichnet, daß zur Betätigung des ersten Stellgliedes eine elektrisch oder elektro-magnetisch betätigbare Einrichtung dient.

11. Druckluftbetätigte Zweileitungsbremsanlage nach Anspruch 10, dadurch gekennzeichnet, daß die elektrisch oder elektromagnetisch betätigbare Einrichtung mit einem ein dem Druck in der Bremsanlage des Zugfahrzeugs entsprechendes elektrisches Signal oder ein der Stellung der Trittplatte des Motorwagen-Bremsventils (55) entsprechendes elektrisches Signal erzeugenden Signalgeber (78) elektrisch verbunden ist.

12. Druckluftbetätigte Zweileitungsbremsanlage nach Anspruch 11, dadurch gekennzeichnet, daß eine Verzögerungseinrichtung vorgesehen ist, welche ein vom Signalgeber (78) erzeugtes, für die elektrisch oder elektromagnetisch betätigbare Einrichtung bestimmtes elektrisches Signal verzögert, in der Weise, daß das erste Stellglied den Drosselkolben (80) erste eine vorbestimmte Zeit nach Beginn der Druckeinsteuerung in die Steuerkammer (3) der Steuerventileinrichtung (82) in seine zweite Betriebsstellung bringt.

13. Druckluftbetätigte Zweileitungsbremsanlage nach wenigstens einem der vorhergehenden Ansprüche, gekennzeichnet durch die folgenden Merkmale:
a) der Drosselsteuerkolben (60) ist als Hohlkolben ausgebildet;
b) im Drosselsteuerkolben (60) ist ein Hilfssteuerkolben (70) in Richtung der Längsachse des Drosselsteuerkolbens (60) ver-schiebbar angeordnet;
c) der Hilfssteuerkolben (70) trennt eine erste Teilkammer (65) von einer zweiten Teilkammer (64), welche die Drosselsteuerkammer (65, 64) bilden;
d) am Drosselsteuerkolben (60) ist ein Stift (67) angeordnet, der sich durch eine Durchgangsöffnung (66) des Hilfssteuerkolbens (70) hindurch bis in die zweite Teilkammer (64) hineinerstreckt;
e) der Durchmesser des Stifts (67) und der Durchmesser der Durchgangsöffnung (66) sind so bemessen, daß von der äußeren Mantelfläche des Stiftes (67) und der die Durchgangsöffnung (66) begrenzenden Wand des Hilfssteuerkolbens (70) ein Drosselspalt (85) begrenzt wird;
f) eine erste Wirkfläche (52) des Drosselsteuerkolbens (60) begrenzt zusammen mit der dieser gegenüberliegenden Seite des Hilfssteuerkolbens (70) die erste Teilkammer (65) und eine als Ringfläche ausgebildete zweite Wirkfläche (88) des Drosselsteuerkolbens (60) begrenzt zusammen mit der der ersten Teilkammer (65) abgewandten Seite des Hilfssteuerkolbens (70) die zweite Teilkammer (64);
g) über den Drosselspalt (85) ist die erste Teilkammer (65) ständig mit der zweiten Teilkammer (64) verbunden;
h) am Drosselsteuerkolben (60) ist ein Anschlag (54) vorgesehen, welcher den Hub des Hilfssteuerkolbens (70) in Richtung auf die erste Wirkfläche (52) des Drosselsteuerkolbens (60) zu begrenzt;
i) es ist ein gehäusefester weiterer Anschlag (86) vorgesehen, welcher den Hub des Hilfssteuerkolbens (70) in Richtung von der ersten Wirkfläche (52) des Drosselsteuerkolbens (60) weg begrenzt;
k) die erste Teilkammer (64) ist über einen die Wand des Drosselsteuerkolbens (60) durchdringenden Kanal (57) mit der zur Steuerkammer (3) des Anhänger-Steuerventils führenden Druckmittelleitung (71) verbunden.

14. Druckluftbetätigte Zweileitungsbremsanlage nach wenigstens einem der vorhergehenden Ansprüche, dadurch gekennzeichnet,daß in der die Drosselsteuerkammer (65, 64) mit der die Steuerkammer (3) der Steuerventileinrichtung verbindenden Druckmittelleitung (71) eine Drossel angeordnet ist.

15. Druckluftbetätigte Zweileitungsbremsanlage nach Anspruch 1, gekennzeichnet durch die folgenden Merkmale:
a) die Steuerventileinrichtung (82) weist eine Druckmitteleingangskammer (23, 16), eine Druckmittelausgangskammer (8) und eine Steuerkammer (3) auf;
b) die Druckmittelausgangskammer (8) ist über ein kombiniertes Einlaß- und Auslaßventil (11, 12, 10) wahlweise mit der Druckmitteleingangskammer (23, 16) oder mit der Atmosphäre verbindbar oder gegen beide absperrbar;
c) zur Betätigung des kombinierten Einlaß- und Auslaßventils (11, 12, 10) ist wenigstens ein von einem Steuerdruck in der Steuerkammer (3) beaufschlagbarer Relaiskolben (4) vorgesehen;
d) die Druckmitteleingangskammer (23, 16) ist über einen Druckmitteleingang (24) mit dem Ausgang (27) der Drossel (80, 87) und über einen Druckmittelausgang (17) mit dem der Drossel (80, 87) nachgeschalteten Leitungsteil (15) der Anhänger-Vorratsleitung (42, 15) verbunden;
e) die Druckmittelausgangskammer (8) ist über einen Druckmittelausgang (9) mit der Anhänger-Bremsleitung (7) verbunden;
f) die Steuerkammer (3) ist über ein Ventil (55, 73) mit einer Druckmittelquelle verbindbar.

16. Druckluftbetätigte Zweileitungsbremsanlage nach Anspruch 15, dadurch gekennzeichnet, daß als Ventil zum Einsteuern von Druckluft in die Steuerkammer (3) ein Motorwagen-Bremsventil (55) dient.

17. Druckluftbetätigte Zweileitungsbremsanlage nach Anspruch 15, dadurch gekennzeichnet, daß das Ventil als elektromagnetisch betätigbares Proportionalventil (73) ausgebildet ist, mit einem Druckmitteleingang, einem Druckmittelausgang und einem zu einer Druckmittelsenke hin führenden Druckmittelauslaß sowie mit einem elektrischen Steueranschluß (72), wobei der Druckmitteleingang mit der Vorratsleitung (42, 15), der Druckmittelausgang mit der Steuerkammer (3) und der elektrische Steueranschluß (72) mit einem elektrischen Signalgeber (78) verbunden ist.

## Claims

1. Compressed air-operated dual line brake system having the following features:
a) a trailer supply line (42, 15) for compressed air arranged between a compressed air source (45, 43) of a towing vehicle and a trailer vehicle is provided;
b) a control valve arrangement (82) for supplying a trailer brake line (7) arranged between the towing vehicle and the trailer vehicle with compressed air from the part (42) of the trailer supply line (42, 15) on the towing vehicle side is provided;
c) a variable throttle (80, 87) is arranged between the compressed air source (45, 43) of the towing vehicle and a branch point of the trailer supply line (42, 15) from which a brake system of the trailer vehicle is fed with compressed air from the supply;
d) a first control member (60), which is operable as the trailer brake line (7) is being charged with compressed air, is provided to operate the throttle (80, 87);
characterised by the following features:
e) the throttle (80, 87) is constructed so that it is arranged to be brought by means of the first control member (60) from an unthrottled first operating position into a defined throttled second operating position;
f) a second control member (80) is provided, by means of which the throttle (80, 87) is arranged to be brought in dependence on the difference in the pressures at its inlet (41) and its outlet (24) out of the second operating position into a position with reduced opening cross-section.

2. Compressed air-operated dual line brake system according to claim 1, characterised by the following features:
a) the second control member (80) is arranged, so as to be movable relative to an opening (87) in the throttle (80, 87) connecting an input chamber (40) of the throttle (80, 87) with an output chamber (83, 29, 35) of the throttle (80, 87), so that on movement towards the opening (87) it decreases opening cross-section (X) thereof.
b) the input chamber (40) is connected by way of an inlet (41) of the throttle (80, 87) to a line part (42) of the trailer supply line (42, 15) arranged upstream of the throttle (80, 87), and the output chamber (83, 29, 35) is connected by way of an outlet (27) of the throttle (80, 87) to a line part (15) of the trailer supply line (42, 15) behind the throttle (80, 87);
c) a spring (33) is provided, which biasses the second control member (80) towards the input chamber (40);
d) the spring (33) is so designed and the dimensions of the opening cross-section of the opening (87) in the second operating position of the throttle (80, 87) are such that the second control member (80) is brought by pressure medium in the input chamber (40) against the force of the spring (33) from the second operating position into the third operating position of the throttle (80, 87), in which the opening cross-section of the opening (87) is very small or is blocked, when the pressure in the output chamber (83, 35) drops compared with the pressure in the input chamber (40).

3. Compressed air-operated dual line brake system according to at least one of the preceding claims, characterised in that the second control member is in the form of a throttle piston (80).

4. Compressed air-operated dual line brake system according to at least one of the preceding claims, characterised in that the throttle (80, 87) is formed by the throttle piston (80) and the opening (87).

5. Compressed air-operated dual line brake system according to at least one of the preceding claims, characterised in that the throttle is formed by an opening and by a throttle element operable by the throttle piston (80).

6. Compressed air-operated dual line brake system according to at least one of the preceding claims, characterised by the following features:
a) the first control member is formed by a throttle control piston (60) which is movable by the control pressure in a throttle control chamber (65, 64) against the force of a spring (53) towards the opening (87);
b) a stop means (49) limiting the stroke of the throttle control piston (60) towards the opening (87) is provided;
c) the throttle control piston (60) is constructed so that on being acted upon by control pressure medium it brings the throttle piston (80) from its first operating position into its second operating position;
d) the throttle control chamber (65, 64) is connected by way of a pressure medium line (71) to the control chamber (3) of the control valve arrangement (82).

7. Compressed air-operated dual line brake system according to at least one of the preceding claims, characterised by the following features:
a) the first control member (60) is arranged to be movable towards the opening (87) or towards or away from the output chamber (83, 29, 35);
b) means limiting the stroke of the first control member (60) towards the opening (87) or towards the output chamber (83, 29, 35) are provided;
c) the throttle piston (80) is arranged on the first control member (60) such that it is displaceable in the direction of the longitudinal axis of the first control member (60);
d) a stop means (84) for the throttle piston (80) is arranged on the first control member (60), which stop means limits the path of the throttle piston (80) towards the input chamber (40) of the throttle (80, 87);
e) the stop means (84) is so arranged and the dimensions of the means for limiting the stroke of the first control member (60) are such that the throttle piston (80) is located in its second operating position when it is in engagement with the stop means (84) of the first control member (60) and the first control member has performed a stroke towards the opening (87) or towards the output chamber (83, 29, 35) of the throttle (80, 87).

8. Compressed air-operated dual line brake system according to at least one of the preceding claims, characterised by the following features:
a) the throttle control piston (60) has a stepped extension (51, 30) extending into the output chamber (83, 35) of the throttle (80, 87), the throttle piston (80) being arranged on the part (30) of the extension (51, 30) of smaller diameter so as to be displaceable in the direction of the longitudinal axis of the extension (51, 30);
b) a spring (33) is provided, which is supported at a part (31) of the extension (51, 30) and holds the throttle piston (80) against the step of the extension (51, 30) serving as stop means (84);
c) the stop means (84) for the throttle piston (80) and the stop means (48) for the throttle control piston (60) are so arranged and the dimensions of the throttle piston (80) are such that as the throttle control piston (60) comes into engagement with its associated stop means (49) the throttle piston (80) is in its second operating position, in which the opening cross-section (X) of the opening (87) is reduced.

9. Compressed air-operated dual line brake system according to claim 8, characterised in that the extension (51, 30) has a throttle bore (47, 28) through which the input chamber (40) is permanently connected to the output chamber (83, 35).

10. Compressed air-operated dual line brake system according to at least one of the preceding claims, characterised in that an electrically or electro-magnetically operable device serves to operate the first control member.

11. Compressed air-operated dual line brake system according to claim 10, characterised in that the electrically or electromagnetically operable device is electrically connected to a signal generator (78) producing an electrical signal corresponding to the pressure in the brake system of the towing vehicle or an electrical signal corresponding to the position of the pedal of the motor vehicle brake valve (55).

12. Compressed air-operated dual line brake system according to claim 11, characterised in that a delay device is provided, which delays an electrical signal produced by the signal generator (78) and intended for the electrically or electromagnetically operable device such that the first control member does not bring the throttle piston (80) into its second operating position until a predetermined time after the start of the pressure admission into the control chamber (3) of the control valve arrangement (82).

13. Compressed air-operated dual line brake system according to at least one of the preceding claims, characterised by the following features:
a) the throttle control piston (60) is in the form of a hollow piston;
b) an auxiliary control piston (70) is arranged in the throttle control piston (60) so as to be displaceable in the direction of the longitudinal axis of the throttle control piston (60);
c) the auxiliary control piston (70) separates a first sub-chamber (65) from a second sub-chamber (64), which chambers form the throttle control chamber (65, 64);
d) a pin (67) which extends right through a through-opening (66) of the auxiliary control piston (70) into the second sub-chamber (64) is arranged on the throttle control piston (60);
e) the dimensions of the diameter of the pin (67) and of the diameter of the through-opening (66) are such that a throttle gap (85) is defined by the outer surface of the pin (67) and by the wall of the auxiliary control piston (70) bounding the through-opening (66);
f) a first active face (52) of the throttle control piston (60), together with the side of the auxiliary control piston (70) lying opposite it, bounds the first sub-chamber (65) and a second active face (88) of the throttle control piston (60) in the form of an annular face, together with the side of the auxiliary control piston (70) remote from the first sub-chamber (65), bounds the second sub-chamber (64);
g) the first sub-chamber (65) is permanently connected to the second sub-chamber by way of the throttle gap (85);
h) on the throttle control piston (60) there is provided a stop means (54) which limits the stroke of the auxiliary control piston (70) towards the first active face (52) of the throttle control piston (60);
i) a further stop means (86) integral with the housing is provided, which limits the stroke of the auxiliary control piston (70) in a direction away from the first active face (52) of the throttle control piston (60);
k) the first sub-chamber (64) is connected by way of a channel (57) passing through the wall of the throttle control piston (60) to the pressure medium line (71) leading to the control chamber (3) of the trailer control valve.

14. Compressed air-operated dual line brake system according to at least one of the preceding claims, characterised in that a throttle is arranged in the pressure medium line (71) connecting the throttle control chamber (65, 64) with the control chamber (3) of the control valve arrangement.

15. Compressed air-operated dual line brake system according to claim 1, characterised by the following features:
a) the control valve arrangement (82) has a pressure medium input chamber (23, 16), a pressure medium output chamber (8) and a control chamber (3);
b) the pressure medium output chamber (8) is arranged to be connected by way of a combined inlet and outlet valve (11, 12, 10) selectively to the pressure medium input chamber (23, 16) or to the atmosphere or to be isolated from both;
c) to operate the combined inlet and outlet valve (11, 12, 10) there is provided at least one relay piston (4) which is arranged to be acted upon by a control pressure in the control chamber (3);
d) the pressure medium input chamber (23, 16) is connected by way of a pressure medium input (24) to the outlet (27) of the throttle (80, 87) and by way of a pressure medium output (17) to the line part (15) of the trailer supply line (42, 15) connected downstream of the throttle (80, 87);
e) the pressure medium output chamber (8) is connected by way of a pressure medium outlet (9) to the trailer brake line (7);
f) the control chamber (3) is arranged to be connected to a pressure medium source by way of a valve (55, 73).

16. Compressed air-operated dual line brake system according to claim 15, characterised in that a motor vehicle brake valve (55) acts as valve for admitting compressed air into the control chamber (3).

17. Compressed air-operated dual line brake system according to claim 15, characterised in that the valve is in the form of an electromagnetically operable proportional valve (73) having a pressure medium input, a pressure medium output, and a pressure medium outlet leading to a pressure medium sink, as well as an electrical control connection (72), the pressure medium input being connected to the supply line (42, 15), the pressure medium output being connected to the control chamber (3) and the electrical control connection (72) being connected to an electrical signal generator (78).

## Revendications

1. Installation de freinage à deux circuits à air comprimé présentant les caractéristiques suivantes :
a) il est prévu entre une source d'air comprimé (45, 43) d'un véhicule tracteur et d'un véhicule tracté une conduite de réserve de remorque (42, 15) pour l'air comprimé ;
b) il est prévu une soupape de commande (82) pour l'alimentation d'une conduite de freinage de remorque (7) agencée entre le véhicule tracteur et le véhicule tracté, en air comprimé provenant de la partie côté véhicule tracteur (42) de la conduite de réserve de remorque (42, 15);
c) un étranglement (80, 87) variable est agencé entre la source d'air comprimé (45, 43) du véhicule tracteur et un point de bifurcation de la conduite de réserve de remorque (42, 15) depuis lequel un système de freinage du véhicule tracté est alimenté en air comprimé de réserve ;
d) pour actionner l'étranglement (80, 87), il est prévu un premier organe de réglage (60) qui est susceptible d'être actionné pendant une alimentation de la conduite de freinage (7) de la remorque avec de l'air comprimé ;
caractérisée par les caractéristiques suivantes :
e) l'étranglement (80, 87) est réalisé de telle manière qu'il peut être amené depuis une première position de fonctionnement non étranglée dans une seconde position de fonctionnement définie étranglée ;
f) il est prévu un second organe de réglage (80) au moyen duquel l'étranglement (80, 87), en fonction de la différence entre les pressions à son entrée (41) et à sa sortie (24), peut être amené depuis la seconde position de fonctionnement dans une position à section de passage réduite.

2. Installation de freinage à deux circuits à air comprimé selon la revendication 1, caractérisée par les caractéristiques suivantes :
a) le second organe de réglage (80) est agencé de manière mobile par rapport à un passage (87) de l'étranglement (80, 87) reliant une chambre d'entrée (40) de l'étranglement (80, 87) avec une chambre de sortie (83, 29, 35) de l'étranglement (80, 87), de telle sorte que lors d'un mouvement vers le passage (87), il en réduit la section de passage (X) ;
b) la chambre d'entrée (40) est reliée par l'intermédiaire d'une entrée (41) de l'étranglement (80, 87) à une partie (42) de la conduite de réserve de remorque (42, 15), qui est située en amont de l'étranglement (80, 87), et la chambre de sortie (83, 29, 35) est reliée par l'intermédiaire d'une sortie (27) de l'étranglement (80, 87) à une partie (15) de la conduite de réserve de remorque (42, 15), qui est située en aval de l'étranglement (80, 87) ;
c) il est prévu un ressort (33) qui sollicite le second organe de réglage (80) en direction de la chambre d'entrée (40) ;
d) le ressort (33) est conçu de telle manière et la section de passage du passage (87) est d'une telle dimension dans la seconde position de fonctionnement de l'étranglement (80, 87) que le second organe de réglage (80) est amené par le fluide sous pression régnant dans la chambre d'entrée (40), à l'encontre de la force du ressort (33), depuis la seconde position de fonctionnement dans la troisième position de fonctionnement de l'étranglement (80, 87) dans laquelle la section de passage du passage (87) est très petite ou bloquée, lorsque dans la chambre de sortie (83, 35), il se produit une chute de pression par rapport a la pression régnant dans la chambre d'entrée (40).

3. Installation de freinage à deux circuits à air comprimé selon l'une au moins des revendications précédentes, caractérisée en ce que le second organe de réglage est réalisé sous la forme d'un piston d'étranglement (80).

4. Installation de freinage à deux circuits à air comprimé selon l'une au moins des revendications précédentes, caractérisée en ce que l'étranglement (80, 87) est formé par le piston d'étranglement (80) et par le passage (87).

5. Installation de freinage à deux circuits à air comprimé selon l'une au moins des revendications précédentes, caractérisée en ce que l'étranglement est formé par un organe d'étranglement susceptible d'être actionné par le piston d'étranglement (80) et par un passage.

6. Installation de freinage à deux circuits à air comprimé selon l'une au moins des revendications précédentes, caractérisée par les caractéristiques suivantes :
a) le premier organe de réglage est formé par un piston de commande d'étranglement (60) qui est susceptible d'être déplacé dans une chambre de commande d'étranglement (65, 64) à l'encontre de la force d'un ressort (53) en direction du passage (87) ;
b) il est prévu une butée (49) limitant la course du piston de commande d'étranglement (60) en direction du passage (87) ;
c) le piston de commande d'étranglement (60) est réalisé de telle manière que lors d'une alimentation en fluide sous pression de commande, il amène le piston d'étranglement (80) depuis sa première position de fonctionnement jusque dans sa seconde position de fonctionnement ;
d) la chambre de commande d'étranglement (65, 64) est reliée à la chambre de commande (3) de la soupape de commande (82) par l'intermédiaire d'une conduite de fluide sous pression (71).

7. Installation de freinage à deux circuits à air comprimé selon l'une au moins des revendications précédentes, caractérisée par les caractéristiques suivantes :
a) le premier organe de réglage (60) est agencé mobile en direction du passage (87) et de la chambre de sortie (83, 29, 35) et en éloignement de celle-ci, respectivement ;
b) il est prévu des moyens pour limiter la course du premier organe de réglage (60) en direction du passage (87) et de la chambre de sortie (83, 29, 35), respectivement ;
c) le piston d'étranglement (80) est agencé en déplacement sur le premier organe de réglage (60) en direction de l'axe longitudinal du premier organe de réglage (60) ;
d) sur le premier organe de réglage (60) est agencée une butée (84) pour le piston d'étranglement (80) qui limite la trajectoire pour le piston d'étranglement (80) en direction de la chambre d'entrée (40) de l'étranglement (80, 87) ;
e) la butée (84) est agencée de telle manière et les moyens de limitation de la course du premier organe de réglage (60) sont de telles dimensions tels que le piston d'étranglement (80) se trouve dans sa seconde position de fonctionnement lorsqu'il s'appuie sur la butée (84) du premier organe de réglage (60) et lorsque le premier organe de réglage a exécuté une course en direction du passage (87) et de la chambre de sortie (83, 29, 35), respectivement, de l'étranglement (80, 87).

8. Installation de freinage à deux circuits à air comprimé selon l'une au moins des revendications précédentes, caractérisée par les caractéristiques suivantes :
a) le piston de commande d'étranglement (60) présente un prolongement (51, 30) en gradins s'étendant jusque dans la chambre de sortie (83, 35) de l'étranglement (80, 87), le piston d'étranglement (80) étant agencé en déplacement sur la partie (30) du prolongement (51, 30) qui présente le diamètre le plus faible ;
b) il est prévu un ressort (33) qui prend appui sur une partie (31) du prolongement (51, 30) et qui maintient le piston d'étranglement (80) sur le gradin du prolongement (51, 30) servant de butée (84) ;
c) la butée (84) pour le piston d'étranglement (80) et la butée (48) pour le piston de commande d'étranglement (60) sont agencées de telle manière, et le piston d'étranglement (80) est de telle dimension que lorsque le piston de commande d'étranglement (60) vient en appui sur sa butée (49) associée, le piston d'étranglement (80) se trouve dans sa seconde position de fonctionnement dans laquelle la section de passage (X) du passage (87) est réduite.

9. Installation de freinage à deux circuits à air comprimé selon la revendication 8, caractérisée en ce que le prolongement (51, 30) présente un perçage d'étranglement (47, 28) par l'intermédiaire duquel la chambre d'entrée (40) est en liaison permanente avec la chambre de sortie (83, 35).

10. Installation de freinage à deux circuits à air comprimé selon l'une au moins des revendications précédentes, caractérisée en ce qu'un dispositif à actionnement électrique ou électromagnétique sert à actionner le premier organe de réglage.

11. Installation de freinage à deux circuits à air comprimé selon la revendication 10, caractérisée en ce que le dispositif à actionnement électrique ou électromagnétique est relié électriquement à un générateur de signaux (78) engendrant un signal électrique correspondant à la pression régnant dans l'installation de freinage du véhicule tracteur ou un signal électrique correspondant à la position de la pédale d'actionnement du robinet de freinage (55) du véhicule.

12. Installation de freinage à deux circuits à air comprimé selon la revendication 11, caractérisée en ce qu'il est prévu un dispositif de retardement qui retarde un signal électrique engendré par le générateur de signaux (78) et qui est destiné au dispositif à actionnement électrique ou électromagnétique, de telle sorte que le premier organe de réglage n'amène le piston d'étranglement (80) dans sa seconde position de fonctionnement qu'après une durée déterminée suivant le début de l'injection de la pression dans la chambre de commande (3) de la soupape de commande (82).

13. Installation de freinage à deux circuits à air comprimé selon l'une au moins des revendications précédentes, caractérisée par les caractéristiques suivantes :
a) le piston de commande d'étranglement (60) est réalisé sous la forme d'un piston creux ;
b) dans le piston de commande d'étranglement (60), un piston de commande auxiliaire (70) est agencé en déplacement en direction de l'axe longitudinal du piston de commande d'étranglement (60) ;
c) le piston de commande auxiliaire (70) sépare une première chambre partielle (65) d'une seconde chambre partielle (64) qui forment les chambres de commande d'étranglement (65, 64) ;
d) sur le piston de commande d'étranglement (60) est agencée une goupille (67) qui s'étend à travers un orifice de traversée (66) du piston de commande auxiliaire (70) jusque dans la seconde chambre partielle (64) ;
e) le diamètre de la goupille (67) et le diamètre de l'orifice de traversée (66) ont des dimensions telles qu'une fente d'étranglement (85) est délimitée par la surface enveloppe extérieure de la goupille (67) et par la paroi du piston de commande auxiliaire (70) qui délimite l'orifice de traversée (66) ;
f) une première surface active (52) du piston de commande d'étranglement (60) délimite la première chambre partielle (65) conjointement avec le côté du piston de commande auxiliaire (70) opposé à celle-ci, et une seconde surface active (88) du piston de commande d'étranglement (60), réalisée sous forme de surface annulaire, délimite la seconde chambre partielle (64) conjointement avec le côté du piston de commande auxiliaire (70) qui est détourné de la première chambre partielle (65) ;
g) par l'intermédiaire de la fente d'étranglement (85), la première chambre partielle (65) est reliée en permanence avec la seconde chambre partielle (64) ;
h) sur le piston de commande d'étranglement (60) est prévue une butée (54) qui limite la course du piston de commande auxiliaire (70) en direction de la première surface active (52) du piston de commande d'étranglement (60) ;
i) il est prévu une autre butée (86) solidaire du boîtier qui limite la course du piston de commande auxiliaire (70) en éloignement de la première surface active (52) du piston de commande d'étranglement (60) ;
k) la première chambre partielle (64) est reliée à la conduite de fluide sous pression (71) menant à la chambre de commande (3) de la soupape de commande de remorque, par l'intermédiaire d'un canal (57) traversant la paroi du piston de commande d'étranglement (60).

14. Installation de freinage à deux circuits à air comprimé selon l'une au moins des revendications précédentes, caractérisée en ce qu'un étranglement est agencé dans la conduite de fluide sous pression (71) reliant la chambre de commande d'étranglement (64, 65) avec la chambre de commande (3) de la soupape de commande.

15. Installation de freinage à deux circuits à air comprimé selon l'une au moins des revendications précédentes, caractérisée par les caractéristiques suivantes :
a) la soupape de commande (82) présente une chambre d'entrée de fluide sous pression (23, 16), une chambre de sortie de fluide sous pression (8) et une chambre de commande (3) ;
b) par l'intermédiaire d'une soupape combinée d'admission et d'échappement (11, 12, 10), la chambre de sortie de fluide sous pression (8) est susceptible d'être reliée sélectivement à la chambre d'entrée du fluide sous pression (23, 16) et à l'atmosphère ou bien d'être fermée vis-à-vis des deux ;
c) pour actionner la soupape combinée d'admission et d'échappement (11, 12, 10), il est prévu au moins un piston relais (4) susceptible d'être alimenté par une pression de commande dans la chambre de commande (3) ;
d) la chambre d'entrée de fluide sous pression (23, 16) est reliée à la sortie (27) de l'étranglement (80, 87) par l'intermédiaire d'une entrée de fluide sous pression (24) et à la partie (15) de la conduite de réserve de remorque (42, 15), qui est montée en aval de l'étranglement (80, 87), par l'intermédiaire d'une sortie de fluide sous pression (17) ;
e) la chambre de sortie de fluide sous pression (8) est reliée à la conduite de freinage (7) de la remorque par l'intermédiaire d'une sortie de fluide sous pression (9) ;
f) la chambre de commande (3) est susceptible d'être reliée à une source de fluide sous pression par l'intermédiaire d'une soupape (55, 73).

16. Installation de freinage à deux circuits à air comprimé selon la revendication 15, caractérisée en ce qu'un robinet de freinage de véhicule (55) sert de soupape pour injecter l'air comprimé dans la chambre de commande (3).

17. Installation de freinage à deux circuits à air comprimé selon la revendication 15, caractérisée en ce que la soupape est réalisée sous la forme d'une soupape proportionnelle (73) à actionnement électromagnétique comportant une entrée de fluide sous pression, une sortie de fluide sous pression et un échappement de fluide sous pression menant à un puits de fluide sous pression ainsi qu'un raccord de commande (72) électrique, l'entrée de fluide sous pression étant relié à la conduite de réserve (42, 15), la sortie de fluide sous pression à la chambre de commande (3) et le raccord de commande (72) électrique à un générateur électrique de signaux (78).
